# EUROPÄISCHE PATENTANMELDUNG

(11) **EP 0 530 508 A2**
(43) Veröffentlichungstag der Anmeldung: **10.03.1993**
(21) Anmeldenummer: 92113115.7
(22) Anmeldetag: 31.07.1992
(51) Int. Cl.: B28B 1/26, C03B 9/48

(54) **Verfahren zur Herstellung einer Form und Form zur Erzeugung von Glasartikeln**

(30) Priorität: 02.08.1991 DE 4125713; 19.09.1991 DE 4131215
(71) Anmelder: OLAF FISCHER UND HEINER LEGAT, D-92660 Neustadt (DE)
(72) Erfinder: OLAF FISCHER UND HEINER LEGAT, D-92660 Neustadt (DE)
(74) Vertreter: von Puttkamer, Nikolaus, Dipl.-Ing. Patentanwälte Haft, von Puttkamer Berngruber, Czybulka

(57) **Zusammenfassung**

Die Erfindung betrifft ein Verfahren zur Herstellung einer Form zur Erzeugung von Glasartikeln, wobei die Form aus einem gießfähigen Keramikmaterial einer extrem kleinen Trockenschwindung gebildet wird. Bevorzugt wird als Keramikmaterial SiSiC-Keramikmaterial verwendet. Die Erfindung betrifft ferner eine Form zur Erzeugung von Glasartikeln, die aus einem gießfähigen Keramikmaterial hergestellt ist, das eine extrem kleine Trockenschwindung aufweist.

## Beschreibung

Die Erfindung betrifft ein Verfahren zur Herstellung einer Form zur Erzeugung von Glasartikeln nach dem Oberbegriff des Patentanspruches 1 und eine nach diesem Verfahren hergestellt Form nach dem Oberbegriff des Patentanspruches 9.

Bisher wurden Gegenstände aus Glas beispielsweise in Birnenholz-Formen geblasen. Dabei wird die Form aus einem Birnenholzkloben oder dergleichen herausgefräst. Es ist erkennbar, daß dieses Fräsverfahren sehr aufwendig ist. Ein weiteres Problem besteht darin, daß Birnenholz als Rohmaterial immer teuerer wird. Zudem haben Birnenholz-Formen, die üblicherweise mit Graphit bzw. Kohlestaub bestäubt werden, um gegen die beim Blasen der Glasartikel entstehende Hitze resistenter zu sein, trotzdem keine hohe Lebensdauer, da sie infolge der auftretenden hohen Glastemperaturen bei den Blasoperationen verbrennen. Beispielsweise können in einer Birnenholz-Form etwa nur dreihundert Gegenstände hergestellt werden. Es muß dann eine völlig neue Form produziert werden.

Bei der Herstellung von technischen Gläsern, beispielsweise von Reagenzgläsern, werden üblicherweise Formen auf Kohlebasis verwendet, wobei ein Problem ebenfalls darin besteht, daß Formen auf Kohlebasis infolge der hohen Glastemperaturen bei den Blasoperationen verbrennen und daher keine lange Lebensdauer aufweisen.

Die Aufgabe der vorliegenden Erfindung besteht daher darin, ein relativ preiswert ausführbares Verfahren zur Herstellung einer Form zur Erzeugung von Glasartikeln und eine Form anzugeben, die eine vergleichsweise hohe Lebensdauer aufweist.

Diese Aufgabe wird durch ein Verfahren, das durch die in dem kennzeichnenden Teil des Patentanspruches 1 angegebenen Merkmale gekennzeichnet ist, und durch eine Form gelöst, die durch die in dem kennzeichnenden Teil des Patentanspruches 9 angegebenen Merkmale gekennzeichnet ist.

Der wesentliche Vorteil besteht darin, daß nach der Erfindung hergestellte Formen, die insbesondere für Blasoperationen geeignet sind, extrem billig und einfach herstellbar sind, eine sehr lange Lebensdauer aufweisen, die Entstehung von sogenannten Eisenflecken verhindern und nicht an den heißen Glasartikeln verkleben. Die Verwendung der erfindungsgemäßen Formen führt daher dazu, daß Glasartikel wesentlich billiger als bisher herstellbar sind. Ferner weisen Glasartikel, die mit den erfindungsgemäßen Formen hergestellt sind, eine wesentlich höhere Maßgenauigkeit und Konturentreue auf. Im Vergleich zu Metallformen besitzen die erfindungsgemäßen Formen ein kleines Gewicht, so daß sie vergleichsweise einfach handhabbar sind. Da die erfindungsgemäßen Formen extrem hart sind, ist die Abriebfestigkeit derselben äußerst klein. Bei der Herstellung der erfindungsgemäßen Formen lassen sich vorteilhafterweise äußerst einfach Befestigungseinrichtungen in die Formen einbringen, die für die Anbringung der Formen in Bearbeitungs- und Glasherstellungsmaschinen erforderlich sind.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
- Fig. 1 bis 5: die Schritte zur Herstellung eines Formteiles und
- Fig. 6 und 7: Weiterbildungen der Erfindung.

Zu der Erfindung führten die folgenden Überlegungen. Bisher wurden Glasartikel ausschließlich nach den eingangs genannten Verfahren unter Verwendung von Birnenholz-Formen oder Formen auf Kohlebasis hergestellt. Andere Materialien fanden keine Anwendung. Insbesondere wurde nicht an die Herstellung von Formen im Hohlgußverfahren gedacht, weil die dabei bislang verwendeten Materialien eine hohe Schwindung erfahren. Aus diesem Grunde ging man davon aus, daß auf ein Modell zur Abformung aufgebrachte Materialien beim Hohlgußverfahren derart schwinden, daß sie ohne Beschädigung nicht mehr vom Modell abgenommen werden können oder daß, falls die Abnahme vom Modell doch möglich ist, aufgrund der Schwindung die aus z.B. zwei Formteilen zusammengesetzte Form im Zusammensetzungsbereich unerwünscht große Nähte aufweist. Man ging ferner davon aus, daß eine Vergrößerung des Modells entsprechend der zu erwartenden Schwindung nicht praktikabel ist, weil die zu erwartende Schwindung in verschiedenen Richtungen unterschiedlich groß ist.

Im Rahmen der vorliegenden Erfindung wurde nun völlig überraschend herausgefunden, daß SiSiC-Keramikmaterial für die Herstellung von Formen für die Glasverarbeitung geeignet ist, weil es eine äußerst geringe Trocknungschwindung aufweist. Es können daher im Hohlgußverfahren aus einem Modell in einer äußerst einfachen und extrem billigen Weise Formteile hergestellt werden, die zur Abbildung des Modells durch eine Blasoperation zu einer Form zusammengesetzt werden können, die im Zusammensetzungsbereich im wesentlichen keine Nähte aufweist.

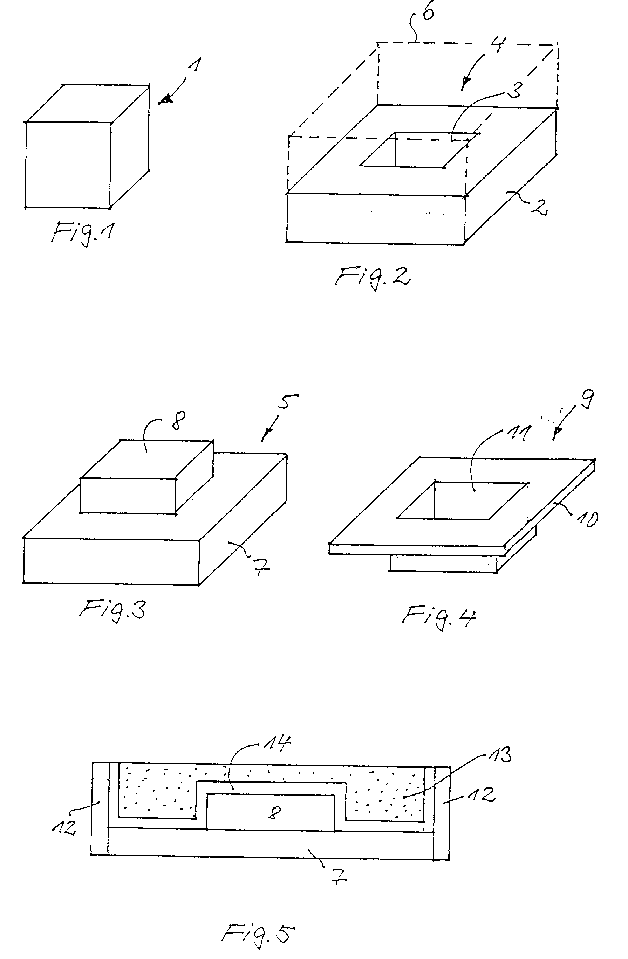

In der Figur 1 ist ein Modell 1 dargestellt, das durch eine Blasoperation aus Glas hergestellt werden soll und das der Einfachheit halber als Quader dargestellt ist. Beispielsweise handelt es sich bei einem solchen Modell um eine Christbaumkugel, eine als Christbaumbehang dienende Figur oder dergleichen.

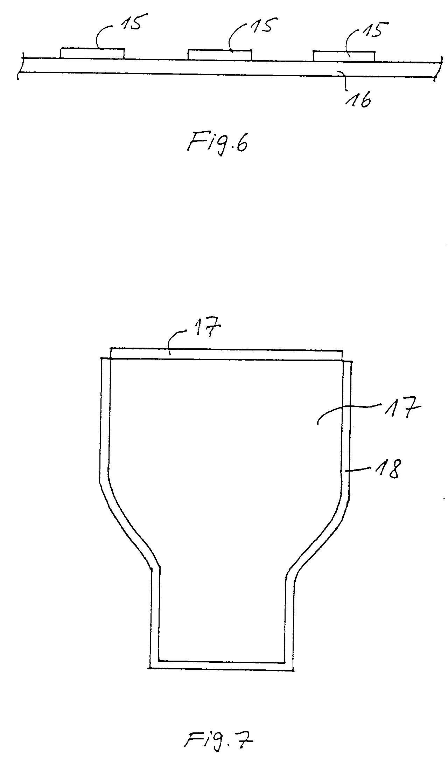

Die Figur 2 zeigt eine Negativ- bzw. Urform 4, die beispielsweise aus Gips durch Abformen des Modelles 1 hergestellt ist. Da das Modell 1 in der Regel nicht so einfach und symmetrisch ist, wie dies die Figur 1 zeigt, werden vom Modell 1 in allgemeinen zwei Urformen 4 aus Gips hergestellt, von denen jeweils eine einer Hälfte des Modelles 1 entspricht. In der Figur 2 entspricht daher in der Urform 4 der Hohlraum 3 einer Hälfte des Modelles 1. Die den Hohlraum 3 umgebende Wandung ist mit 2 bezeichnet.

Aus der Urform 4 der Figur 2 wird gemäß Figur 3 vorzugsweise ebenfalls aus Gips ein Arbeitsmodell 5 hergestellt. Zu diesem Zweck wird die Urform 4 in einem Rahmenteil 6 oder dergleichen angeordnet, das die Wandung 2 der Urform 4 umgibt und über die den Hohlraum 3 aufweisende Seite der Urform 4 hinausragt. Auf diese Weise entsteht durch Eingießen von Gips das Arbeitsmodell 5, das an einer durch den Rahmen 6 bestimmten Grundplatte 7 ein Positivteil 8 enthält, das dem Hohlraum 3 entspricht. Vorzugsweise nach dem Hohlgußverfahren wird von diesem Arbeitsmodell 5 der Figur 3 ein Formteil 9 (Figur 4) hergestellt, das einen dem Positivteil 8 entsprechenden Hohlraum 11 enthält. Zur Herstellung des Formteiles 9 wird gemäß der Schnittdarstellung der Figur 5 das Arbeitsmodell 5 in ein Rahmenteil 12 oder dergleichen eingesetzt, das die Grundplatte 7 seitlich dicht umgibt oder an diese dicht angesetzt ist und an der Seite des Positivteiles 8 über die Grundplatte 7 hinausragt. Das Rahmenteil 12 besteht vorzugsweise ebenfalls aus Gips. In die Anordnung der Figur 5 wird das flüssige, gießfähige Keramikmaterial 13, vorzugsweise das SiSiC-Material, eingegossen. Vorzugsweise handelt es sich dabei um eine wässrige Lösung des Keramikmaterials. Wegen der Saugfähigkeit des Gipsmaterials des Arbeitsmodelles 5 und des Rahmenteiles 12 , entsteht an den Innenflächen der Grundplatte 7, des Positivteiles 8 und des Rahmenteiles 12 aufgrund des dort eintretenden Flüssigkeitsentzuges ein Scherbenteil 14, das den Hohlraum 11 umschließt. Dieses Scherbenteil 14 wird nach dem Ausgießen der nicht verfestigten Lösung des Keramikmaterials getrocknet, abgenommen und in einem Ofen gebrannt bzw. gesintert. Für ein Blasoperation werden dieses Formteil 9 und ein weiteres, der anderen Hälfte des Modelles 1 entsprechendes Formteil zusammengesetzt, woraufhin in dem Gesamthohlraum der gebildeten Form der dem Modell 1 entsprechende Glasartikel geblasen werden kann.

Als Keramikmaterial eigenen sich alle Materialien die praktisch keine Trockenschwindung aufweisen. Insbesondere erfüllt infiltriertes Siliciumcarbid (SiC + Si bzw. SiSiC) diese Bedingung. Das Material SISIC ist ein dichtes Material, das eine glatte Oberfläche aufweist und das bei der Herstellung der Form 5 keine Trockenschwindung besitzt. Die Schwindung beim Brennen einer SiSiC-Form beträgt etwa maximal O,5%.

Falls anstelle des dichten Keramikmateriales, vorzugsweise des dichten SiSiC-Materiales ein poröses Material gewünscht wird, wie dies beispielsweise im Zusammenhang mit der Herstellung von Bleikristall und technischen Gläsern der Fall ist, kann zur Erzielung einer höheren Glasqualität aus dem dichten SiSiC durch eine Nachbehandlung der Form 5 durch nochmaliges Brennen oder durch Behandlung mit Säuren, wie z.B. mit einer Flußsäure mit Salpeter, eine Porösität der Oberfläche der Form 5 dadurch hergestellt werden, daß die im Material enthaltenen Metalloxide herausgebrannt oder herausgelöst werden.

Aus den obigen Ausführen geht hervor, daß sich im Zusammenhang mit der in den Figuren 1 bis 5 beschriebenen Herstellung von Formen für Glasoperationen aufgrund seiner nicht vorhandenen Trockenschwindung das Material SiSiC besonders gut eignet. Die in aus SiSiC bestehenden Formen hergestellten Glasartikel zeichnen sich durch eine besonders gute Glasqualität aus, da das SiSiC-Material neben der bereits genannten vernachlässigbaren Trockenschwindung eine hohe Temperaturfestigkeit besitzt. Aus diesem Grunde weisen die hergestellten Formen in sämtlichen Bereichen im Glasformenbau ein extrem lange Lebenszeit auf.

Im Zusammenhang mit der Figur 6 wird nun die Herstellung von Unterlagen 15 erläutert, die bei der Herstellung von Glasartikeln auf Bändern 16 angeordnet werden, um die entformten, heißen Glasartikel zu stützen, damit diese langsam und gleichmäßig abkühlen können. Da in diesem Zusammenhang die Trockenschwindung im Gegensatz zum Formenbau keine Rolle spielt, eignen sich als Material für die Unterlagen 15 auch andere Keramikmaterialien, wie z.B SiSiC und Alumiumtitanat. Von wesentlicher Bedeutung ist es, daß sämtliche Materialien eine hohe Temperaturbeständigkeit aufweisen und daß sie nicht an den heißen Glasartikeln verkleben. Eine Eisenfleckbildung, die verursacht wird, wenn derartige Unterlagen in der bekannten Weise aus Gußeisen bestehen, wird durch den Einsatz der genannten Materialien vermieden.

Die Unterlagen 15 lassen sich ebenfalls in einer äußerst einfachen Weise nach dem Hohlgußverfahren herstellen.

Im Zusammenhang mit der Figur 7 wird nun eine Feuerpolierstütze 17 für einen Glasartikel, z.B. eine Vase 18 beschrieben. Bisher wurden derartige Feuerpolierstützen 9 im Graugußverfahren hergestellt. Wie dies eingangs bereits erläutert wurde, sind die Oberflächen der nach dem Blasverfahren hergestellten Glasartikel, beispielsweise der Vase 18 nicht hundertprozentig glatt, weshalb ein Nachpolieren dadurch vorgenommen wird, daß mit der Hilfe eines Brenners die Glasoberfläche derart verwärmt wird, daß sie zu fließen beginnt und glatt wird. Die Feuerpolierstütze 17 hat dabei die Aufgabe, die weichwerdende Vase 18 zu festigen und ein Verziehen bzw. eine Verformung desselben zu verhindern. Die Feuerpolierstütze 17 wird daher im Inneren der Vase 18 angeordnet.

Die Feuerpolierstützen 17 sind besonders einfach und preiswert im Hohlgußverfahren herstellbar wobei hierzu eine der Vase 18 entsprechende saugfähige Gipsform erzeugt wird.

Als Materialien für die Feuerpolierstütze 17 eignen sich Keramikmaterialien mit einer extrem kleinen Trockenschwindung, wie z.B. SiSiC.

Es wird darauf hingewiesen, daß an der Stelle von Gips zur Herstellung der Urform und des Arbeitsmodelles und der entsprechenden Rahmenteile auch andere Materialien, beispielsweise Kunststoff, verwendet werden können, sofern sie die für den Hohlguß erfortderliche Saugkraft besitzen.

Zur Ausführung der Blasoperation weist jedes Formteil eine rinnenartige Aussparung 16 auf, die beim Zusammensetzen zweier Formteile eine Eintrittsöffnung zum Einführen einer Pfeife bilden.

Es wird darauf hingewiesen, daß mit den vorliegenden Formen auch Glasartikel im Schleuderverfahren hergestellt werden können. Hierzu besteht die Form aus nur einem Formteil, in das das flüssige Glasmaterial von oben eingebracht wird.

## Patentansprüche

1. Verfahren zur Herstellung einer Form zur Erzeugung von Glasartikeln, dadurch gekennzeichnet, daß die Form aus einem gießfähigen Keramikmaterial gebildet wird.

2. Verfahren nach Anspruch 1, dadurch gekennzeichnet, daß als Keramikmaterial ein SiSiC-Keramikmaterial verwendet wird.

3. Verfahren nach Anspruch 1 oder 2, dadurch gekennzeichnet, daß das gießfähige Keramikmaterial die Form einer wässrigen Lösung aufweist.

4. Verfahren nach einem der Ansprüche 1 bis 3, dadurch gekennzeichnet, daß zur Herstellung der Form ein Arbeitsmodell (5) erzeugt wird, das aus einem saugfähigen Material besteht, daß an dem Arbeitsmodell (5) ein den Hohlraum (11) desselben dicht umgebendes Rahmenteil (12) angeordnet wird, das aus einem saugfähigen Material besteht, und daß das gießfähige Keramikmaterial in den vom Rahmenteil umschlossenen Raum eingegossen wird, so daß ein der Form entsprechendes Scherbenteil (14) entsteht.

5. Verfahren nach Anspruch 4, dadurch gekennzeichnet, daß als saugfähiges Material Gips verwendet wird.

6. Verfahren nach Anspruch 4 oder 5, dadurch gekennzeichnet, daß das Scherbenteil (14) nach Abgießen des nicht verfestigten Keramikmaterials (13) getrocknet, vom Arbeitsmodell (5) und dem Rahmenteil (12) entformt und in einem Brennofen gebrannt wird.

7. Verfahren nach Anspruch 6, dadurch gekennzeichnet, daß das Scherbenteil (14) nach dem Abgießen des nicht verfestigten Keramikmaterials und vor der Entfernung etwa 5 Minuten lang getrocknet wird.

8. Verfahren nach Anspruch 6 oder 7, dadurch gekennzeichnet, daß das Brennen bei etwa 2000 °C erfolgt.

9. Form zur Erzeugung von Glasartikeln, hergestellt nach dem Verfahren gemäß einem der Ansprüche 1 bis 8, dadurch gekennzeichnet, daß sie aus einem gießfähigen Keramikmaterial hergestellt ist, das eine extrem kleine Trockenschwindung aufweist.

10. Form nach Anspruch 9, dadurch gekennzeichnet, daß sie aus einem gesinterten SiSiC-Keramikmaterial besteht.

11. Form nach Anspruch 9 oder 10, dadurch gekennzeichnet, daß sie wenigstens eine Befestigungseinrichtung zum Befestigen an einer Arbeitsmaschine aufweist.

12. Form nach Anspruch 11, dadurch gekennzeichnet, daß die Befestigungseinrichtung eine einstückig an die Form angesetzte Halteeinrichtung aus dem Keramikmaterial ist.

13. Form nach Anspruch 12, dadurch gekennzeichnet, daß die Halteeinrichtung die Gestalt eines Stiftes aufweist.

14. Form nach Anspruch 11, dadurch gekennzeichnet, daß die Befestigungseinrichtung ein Gewindeloch oder ein Halteloch ist, das vor dem Brennen in das Scherbenteil (12) eingebracht wird.
